# EUROPEAN PATENT APPLICATION

(11) **EP 3 020 991 A1**
(43) Date of publication of application: **18.05.2016**
(21) Application number: 15193222.5
(22) Date of filing: 05.11.2015
(51) Int. Cl.: F16D 3/06, B62D 1/20, F16C 3/035

(54) **TELESCOPIC SHAFT**

(30) Priority: 12.11.2014 JP 2014229845
(71) Applicant: JTEKT CORPORATION, Osaka-shi Osaka 542-8502 (JP)
(72) Inventor: MIYAWAKI, Naoto, Osaka-shi, Osaka, 542-8502 (JP); KOBAYASHI, Tsune, Osaka-shi, Osaka, 542-8502 (JP); HANATANI, Kazuhiro, Yao-shi, Osaka, 581-0091 (JP); NEZU, Toshihiro, Yao-shi, Osaka, 581-0091 (JP)
(74) Representative: Winter, Brandl, Fürniss, Hübner, Röss, Kaiser, Polte - Partnerschaft mbB

(57) **Abstract**

A telescopic shaft includes an inner shaft (20) and a cylindrical outer shaft (21) that are fitted together. A first raceway groove (23) extending in the axial direction is formed in an outer peripheral surface of the inner shaft (20). A second raceway groove (24 )extending in the axial direction and facing the first raceway groove is formed in an inner peripheral surface of the outer shaft (21). A plurality of balls interposed between the first and second raceway grooves and arranged in a row in the axial direction roll in a first stroke range in the axial direction with respect to the inner shaft and roll in a second stroke range in the axial direction with respect to the outer shaft as the inner and outer shafts move relative to each other in the axial direction. The depth of the first raceway groove (23) decreases from the middle toward both ends of the first stroke range and/or the depth of the second raceway groove (24) decreases from the middle toward both ends of thesecond stroke range.

The outer shaft can be provided with rigidity increasing portions (30) at both ends of the second stroke range.

## Description

### BACKGROUND OF THE INVENTION

### 1. Field of the Invention

The present invention relates to telescopic shafts.

### 2. Description of the Related Art

Japanese Patent Application Publication No. 2007-46769 (JP 2007-46769 A) discloses as a telescopic shaft an intermediate shaft that is applied to a steering system for a vehicle. The intermediate shaft couples a steering shaft and a pinion shaft of a rack and pinion mechanism. The intermediate shaft includes an inner shaft and a cylindrical outer shaft fitted on the inner shaft. Raceway grooves extending in the axial direction are formed in the outer peripheral surface of the inner shaft and the inner peripheral surface of the outer shaft. The raceway groove of the inner shaft faces the raceway groove of the outer shaft, and a plurality of balls arranged in a row in the axial direction are interposed between the raceway grooves so as to be able to roll therebetween. These balls couple the inner and outer shafts so that the inner and outer shafts can move relative to each other in the axial direction and can transmit torque in the rotational direction. Japanese Patent Application Publication No. 2006-349104 (JP 2006-349104 A) also discloses a telescopic shaft similar to that disclosed in JP 2007-46769 A.

When the balls roll in a situation where the telescopic shaft is extended and contracted and torque is transmitted between the inner and outer shafts, each ball may advance or delay as the contact angles between the ball and the wall surfaces of the raceway grooves vary between or among the balls. Such advance and delay of the balls result in irregular intervals between adjoining balls. Moreover, if any of the balls move more than necessary, abnormal noise may be generated or the balls may drop from the raceway grooves. In the case where the telescopic shaft has a mechanism that prevents the balls from dropping from the raceway grooves, the balls may hit and break the mechanism.

The more the accuracy of the telescopic shaft is increased, the higher the sensitivity of the balls is. Accordingly, the balls may move more than necessary in response to a slight dimensional variation of the raceway grooves.

### SUMMARY OF THE INVENTION

It is one object of the present invention to provide a telescopic shaft capable of suppressing such movement of balls that causes advance and delay of the balls.

According to one aspect of the present invention, a telescopic shaft includes: an inner shaft and a cylindrical outer shaft that are fitted together so that the inner and outer shafts can move relative to each other in an axial direction and can transmit torque to each other; a first raceway groove formed in an outer peripheral surface of the inner shaft so as to extend in the axial direction; a second raceway groove formed in an inner peripheral surface of the outer shaft so as to extend in the axial direction and to face the first raceway groove; and a plurality of balls that are interposed between the first and second raceway grooves, that are arranged in a row in the axial direction, and that roll in a first stroke range in the axial direction with respect to the inner shaft and roll in a second stroke range in the axial direction with respect to the outer shaft as the inner shaft and the outer shaft move relative to each other in the axial direction. A depth of the first raceway groove decreases from a middle toward both ends of the first stroke range.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram of a steering system to which a telescopic shaft according to an embodiment of the present invention is applied as an intermediate shaft;
FIG. 2 is a sectional view taken along line A-A in FIG. 1;
FIG. 3 is a schematic partial sectional view of the telescopic shaft;
FIG. 4 is a schematic partial sectional view of the telescopic shaft;
FIG. 5 is a schematic partial sectional view of the telescopic shaft;
FIG. 6 is an enlarged view of a main part shown in FIG. 2;
FIG. 7 is a schematic partial sectional view of a telescopic shaft according to a first embodiment;
FIG. 8 is a schematic partial sectional view of a telescopic shaft according to a second embodiment;
FIG. 9 is a schematic partial sectional view of a telescopic shaft according to a third embodiment;
FIG. 10 is a schematic partial sectional view of a telescopic shaft according to a fourth embodiment;
FIG. 11 is a schematic partial sectional view of a telescopic shaft according to a fifth embodiment;
FIG. 12 is a schematic partial sectional view of a telescopic shaft according to a sixth embodiment;
FIG. 13 is a sectional view taken along line B-B in FIG. 12; and
FIG. 14 is a schematic partial sectional view of a telescopic shaft according to a seventh embodiment.

### DETAILED DESCRIPTION OF EMBODIMENTS

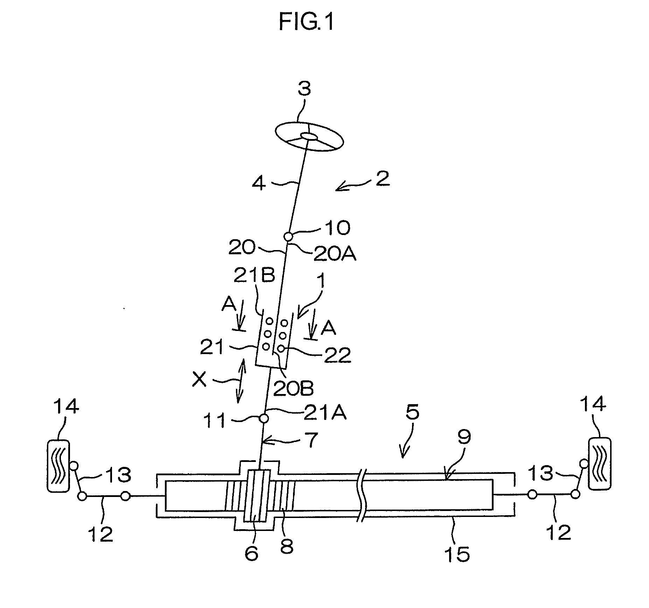

Embodiments of the present invention will be described in detail below with reference to the accompanying drawings. The present invention will be described below with respect to the case where a telescopic shaft 1 is applied to a steering system 2 of a vehicle. However, the telescopic shaft 1 of the present invention may be used in applications other than the steering system 2. FIG. 1 is a schematic diagram of the steering system 2 to which the telescopic shaft 1 is applied as an intermediate shaft.

Referring to FIG. 1, the steering system 2 includes the telescopic shaft 1, a steering shaft 4, and a steering operation mechanism 5. A steering member 3 such as a steering wheel is fixed to the steering shaft 4. The steering operation mechanism 5 is a rack and pinion mechanism having a pinion shaft 7 and a rack shaft 9. The pinion shaft 7 has a pinion 6, and the rack shaft 9 has a rack 8 that meshes with the pinion 6. The telescopic shaft 1 is coupled to the steering shaft 4 via a universal joint 10 so as to be rotatable together with the steering shaft 4. The telescopic shaft 1 is also coupled to the pinion shaft 7 via a universal joint 11 so as to be rotatable together with the pinion shaft 7. The telescopic shaft 1 thus couples the steering shaft 4 and the pinion shaft 7 so that the steering shaft 4 and the pinion shaft 7 can rotate together.

The rack shaft 9 extends in the lateral direction of the vehicle. Tie rods 12 are coupled to both ends of the rack shaft 9. Each tie rod 12 is coupled to steered wheels 14 via knuckle arms 13. The rack shaft 9 is supported by a housing 15 via a bearing (not shown) so as to be movable in the lateral direction of the vehicle. When the steering member 3 is steered and steering torque is generated, the steering shaft 4 is rotated. This rotation of the steering shaft 4 is converted to linear movement of the rack shaft 9 in the lateral direction of the vehicle by the pinion 6 and the rack 8. The steered wheels 14 are steered in this manner.

The telescopic shaft 1 will be described in detail below. The telescopic shaft 1 is what is called a ball slide shaft. The telescopic shaft 1 includes a rod-like inner shaft 20, a cylindrical outer shaft 21, and a plurality of balls 22. The outer shaft 21 is fitted on the inner shaft 20. The balls 22 are disposed between the inner shaft 20 and the outer shaft 21. The inner shaft 20, the outer shaft 21, and the balls 22 are made of, e.g., metal.

The inner shaft 20 is long in the axial direction X of the telescopic shaft 1 and has a first end 20A connected to the universal joint 10. The inner shaft 20 may be a hollow shaft. The outer shaft 21 is long in the axial direction X and has a first end 21A connected to the universal joint 11. The outer shaft 21 has an annular section when taken along a plane perpendicular to the axial direction X. The inner shaft 20 and the outer shaft 21 are fitted together such that a second-end-21B portion of the outer shaft 21 is coaxially fitted on a second-end-20B portion of the inner shaft 20.

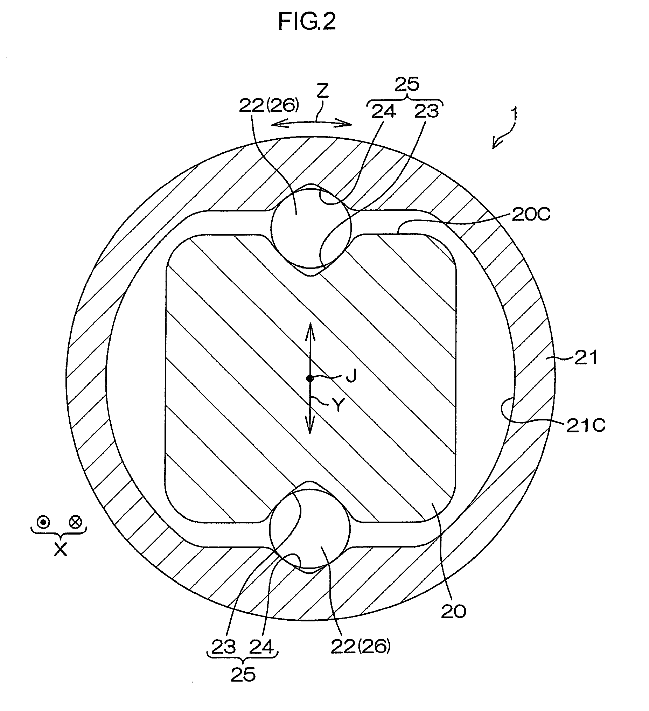

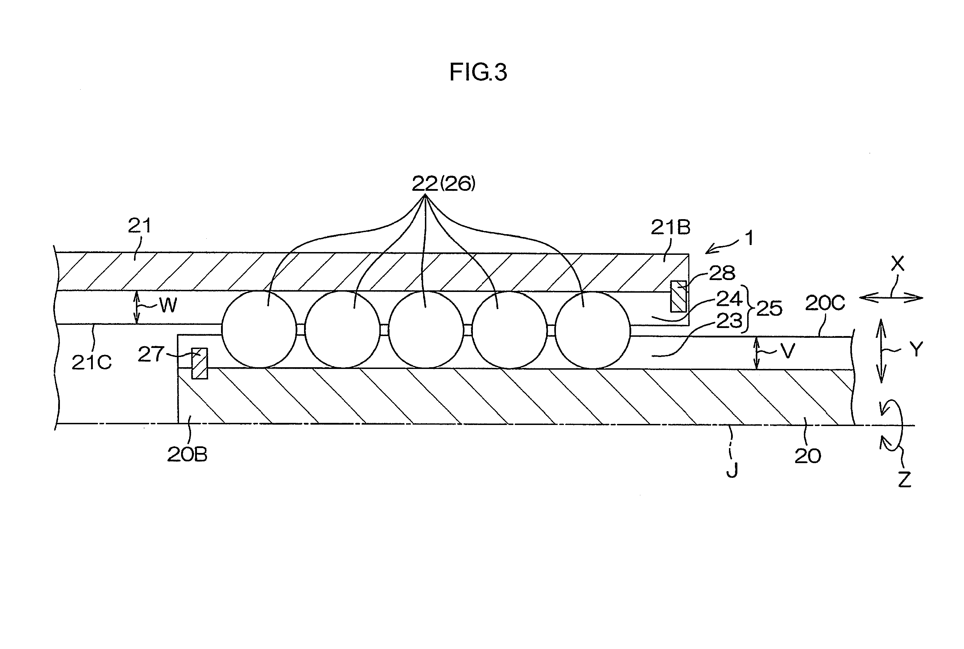

FIG. 2 is a sectional view taken along line A-A in FIG. 1. FIGS. 3 to 5 are schematic sectional views of the telescopic shaft 1 taken along the axial direction X. Referring to FIG. 2, an outer peripheral surface 20C of the inner shaft 20 has a substantially circular shape (to be exact, a substantially rectangular shape with four rounded corners) when the inner shaft 20 is taken along a plane perpendicular to the axial direction X. An inner peripheral surface 21C of the outer shaft 21 has a substantially circular or rectangular shape surrounding the outer peripheral surface 20C of the inner shaft 20 when the outer shaft 21 is taken along a plane perpendicular to the axial direction X. The outer peripheral surface 20C of the inner shaft 20 has first raceway grooves 23 extending in the axial direction X from the second end 20B toward the first end 20A of the inner shaft 20 (see FIG. 1). The inner peripheral surface 21C of the outer shaft 21 has second raceway grooves 24 extending in the axial direction X from the second end 21B toward the first end 21A of the outer shaft 21 (see FIG. 1). The number of first raceway grooves 23 is the same as that of second raceway grooves 24 (in the present embodiment, two). Any number of first raceway grooves 23 and second raceway grooves 24 may be provided as desired.

A radial direction Y and a circumferential direction Z about an axis J will be used in the following description. The axis J refers to a common axis of the inner shaft 20 and the outer shaft 21, which extends in the axial direction X. The first raceway grooves 23 in the inner shaft 20 are formed at regular intervals in the circumferential direction Z. Each of the first raceway grooves 23 is located at the same position in the circumferential direction Z as one of the second raceway grooves 24 in the outer shaft 21. As shown in FIGS. 3 to 5, in each pair of first and second raceway grooves 23, 24 located at the same position in the circumferential direction Z, the first raceway groove 23 (the second-end-20B portion of the inner shaft 20) faces the second raceway groove 24 (the second-end-21B portion of the outer shaft 21) in the radial direction Y.

The portions of the first and second raceway grooves 23, 24 which face each other in the radial direction Y form an elongated raceway track 25 extending in the axial direction X. The number of raceway tracks 25 is the same as the number of first raceway grooves 23 and the number of second raceway grooves 24 (in the present embodiment, two). A plurality of balls 22 are arranged in a row 26 in the axial direction X in each of the raceway tracks 25. There are a plurality of (e.g., five) balls 22 in each row 26, and these balls 22 are aligned substantially at regular intervals in the axial direction X so as to be interposed between the first and second raceway grooves 23, 24 in the raceway track 25.

A protruding stopper 27 is provided at the second end 20B of the inner shaft 20. The protruding stopper 27 protrudes outward in the radial direction Y into the first raceway groove 23. A protruding stopper 28 is provided at the second end 21B of the outer shaft 21. The protruding stopper 28 protrudes inward in the radial direction Y into the second raceway groove 24. The stoppers 27, 28 are placed on both sides of the raceway track 25 in the axial direction X. This prevents the balls 22 from dropping from the raceway track 25 in the axial direction X.

The inner shaft 20 and the outer shaft 21 are coupled to each other via the balls 22 placed in each raceway track 25. The inner shaft 20 and the outer shaft 21 can thus transmit torque to each other in the rotational direction via the balls 22. The inner shaft 20 and the outer shaft 21 can move relative to each other in the axial direction X, and the telescopic shaft 1 is extended and contracted according to the relative movement of the inner and outer shafts 20, 21. When the inner shaft 20 and the outer shaft 21 move relative to each other in the axial direction X, the balls 22 roll with respect to the inner shaft 20 and the outer shaft 21. This reduces resistance to the relative movement of the first inner and outer shafts 20, 21.

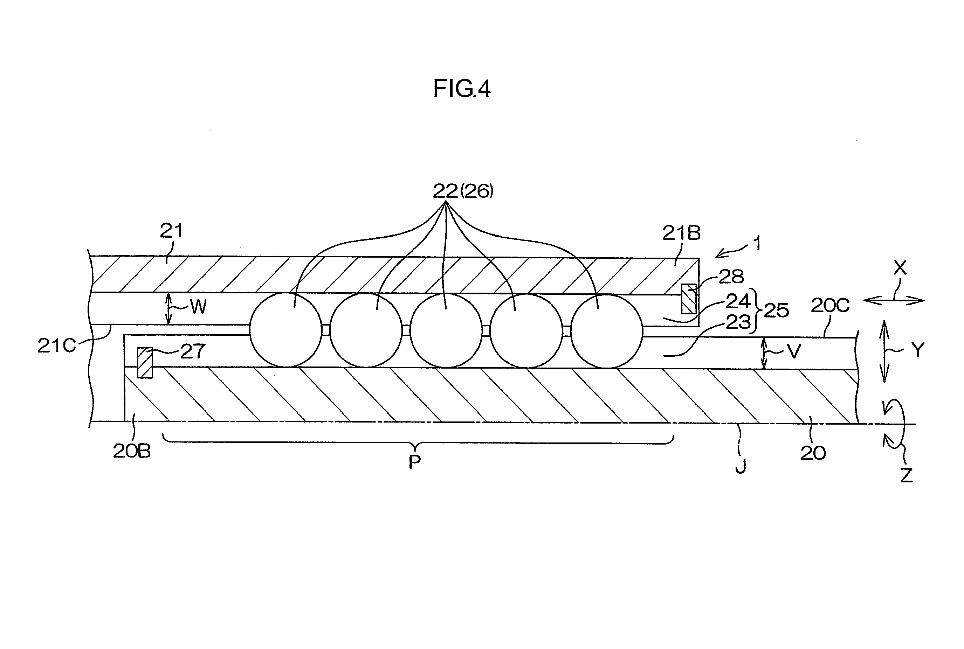

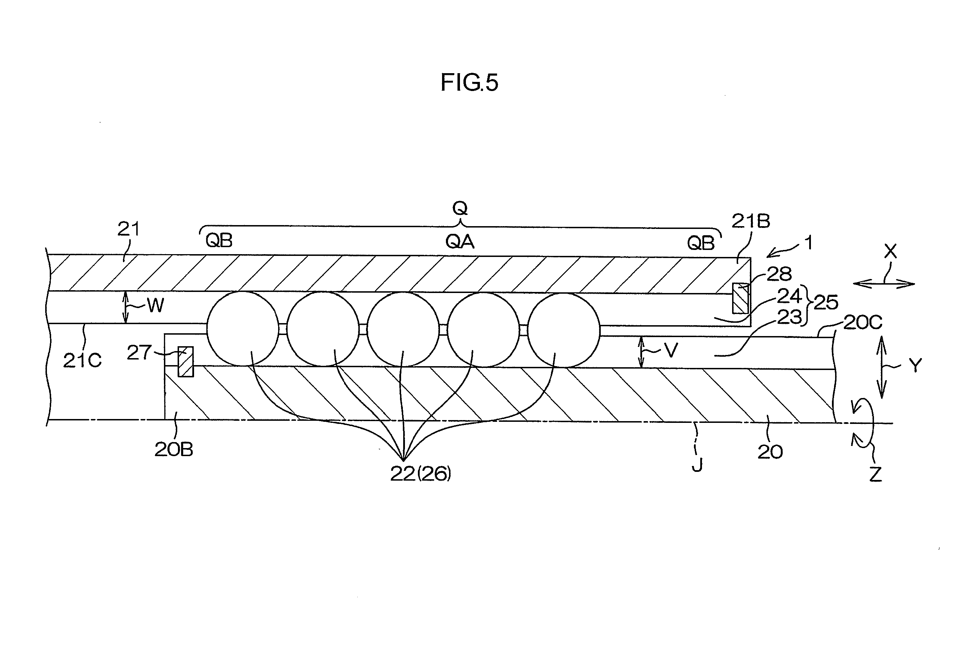

FIG. 3 shows the telescopic shaft 1 extended substantially to the maximum extent. FIG. 4 shows the telescopic shaft 1 contracted substantially to the maximum extent by moving only the inner shaft 20 in the axial direction X. FIG. 5 shows the telescopic shaft 1 contracted substantially to the maximum extent by moving only the outer shaft 21 in the axial direction X. As can be seen from comparison between FIGS. 3 and 4, when the telescopic shaft 1 is extended or contracted, the balls 22 in each raceway track 25 roll in a first stroke range P in the axial direction X with respect to the inner shaft 20 according to the relative movement of the inner and outer shafts 20, 21 in the axial direction X. As can be seen from comparison between FIGS. 3 and 5, when the telescopic shaft 1 is extended or contracted, the balls 22 in each raceway track 25 roll in a second stroke range Q in the axial direction X with respect to the outer shaft 21 according to the relative movement of the inner and outer shafts 20, 21 in the axial direction X. The first stroke range P and the second stroke range Q are longer in the axial direction X to some extent than the row 26 of the balls 22 arranged with small clearance therebetween as shown in FIGS. 3 to 5.

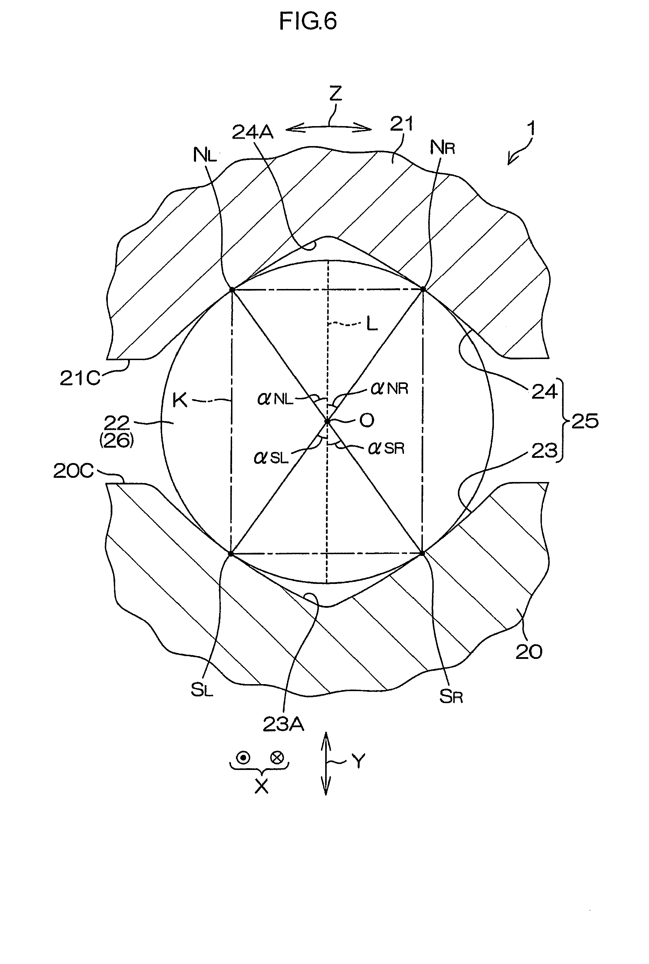

FIG. 6 is an enlarged view of a main part shown in FIG. 2. Referring to FIG. 6, each of the balls 22 contacts the wall surfaces of the first and second raceway grooves 23, 24 at one or more contact points. In the case of FIG. 6, each of the first raceway groove 23 and the second raceway groove 24 has the shape of a gothic arch in section. The balls 22 thus contact a wall surface 23A of the first raceway groove 23 at two contact points S_{R}, S_{L}, and contact a wall surface 24A of the second raceway groove 24 at two contact points N_{R}, N_{L}.

Each ball 22 has contact angles α_{SR}, α_{SL}, α_{NR}, α_{NL} at contact points S_{R}, S_{L}, N_{R}, N_{L}. A line extending through the center O of the ball 22 in the radial direction Y is defined as a reference line L. The contact angle α_{SR} is an angle between a line segment connecting the center O and the contact point S_{R} and the reference line L. The contact angle α_{SL} is an angle between a line segment connecting the center O and the contact point S_{L} and the reference line L. The contact angle α_{NR} is an angle between a line segment connecting the center O and the contact point N_{R} and the reference line L. The contact angle α_{NL} is an angle between a line segment connecting the center O and the contact point N_{L} and the reference line L. FIG. 6 shows an inscribed figure K (see an alternate long and short dash line) as an inscribed quadrilateral having the contact points S_{R}, S_{L}, N_{R}, N_{L} as vertices.

For example, when the steering member 3 (see FIG. 1) is steered while the vehicle is traveling on a rough road, the telescopic shaft 1 is extended and contracted, and rotation torque is transmitted between the inner shaft 20 and the outer shaft 21 accordingly. If the contact angles α_{SR}, α_{SL}, α_{NR}, α_{NL} of each ball 22 change differently when the balls 22 roll in this situation, the shape of the inscribed figure K of each ball 22 changes differently accordingly. In this case, each ball 22 moves at a different speed in the axial direction X, whereby each ball 22 advances or delays, resulting in irregular intervals between adjoining balls 22 in the row 26.

In particular, as shown in FIG. 5, the cylindrical outer shaft 21 tends to be distorted at both ends QB of the second stroke range Q than in a middle QA thereof. Those balls 22 which are located closer to the ends QB with respect to the middle QA (those balls 22 which are located at the ends of the row 26) therefore tend to move unnecessarily. When these balls 22 reach the stopper 27 or 28, the balls 22 become stuck and cannot roll smoothly. This causes resistance to extension and contraction of the telescopic shaft 1.

The telescopic shaft 1 therefore uses a configuration that suppresses advance and delay of the balls 22. First to seventh embodiments will be described as embodiments including this configuration.

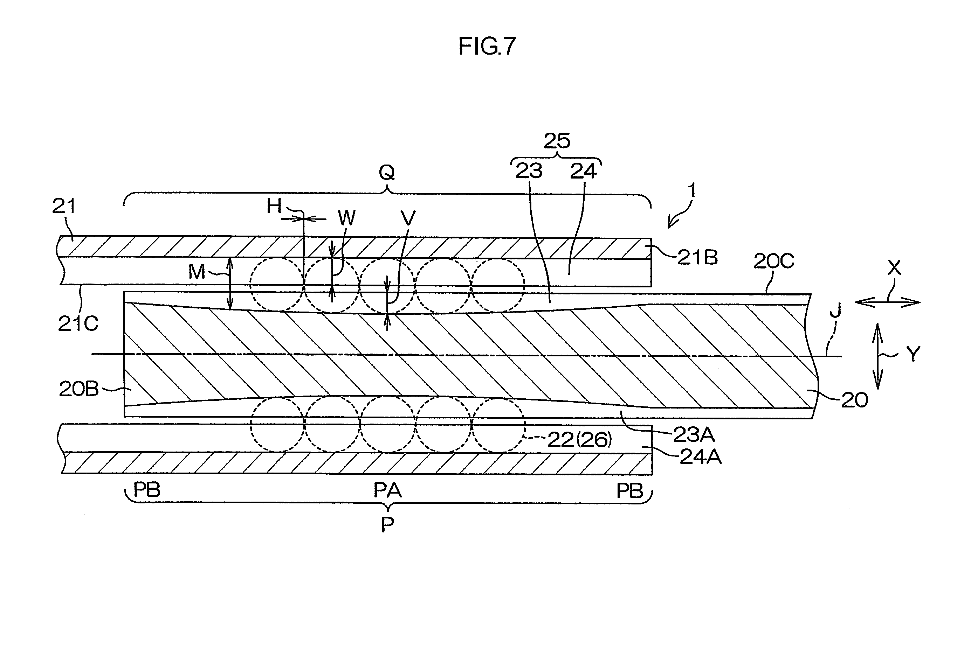

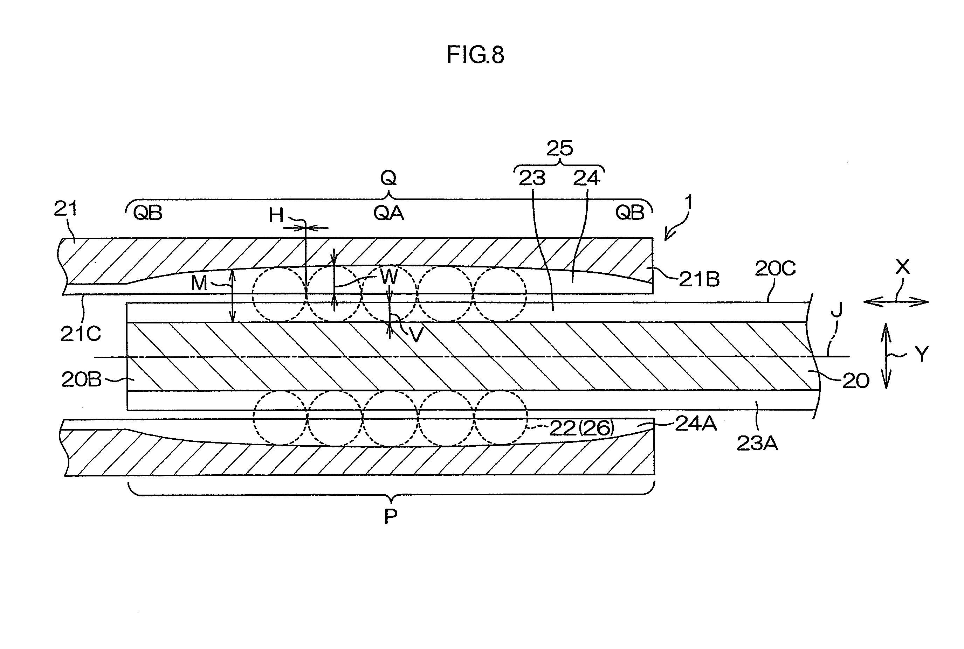

FIG. 7 is a schematic partial sectional view of the telescopic shaft 1 taken along the axial direction X according to the first embodiment. In FIG. 7, the stoppers 27, 28 are not shown, the balls 22 are shown by dashed lines, and the main part is shown exaggerated for convenience of description (the same applies to FIGS. 8 to 12 and 14 described below).

Referring to FIG. 7, in the telescopic shaft 1 of the first embodiment, the depth V (depth in the radial direction Y) of the first raceway groove 23 of the inner shaft 20 decreases from a middle PA toward ends PB of the first stroke range P. For example, the difference in depth V between the middle PA and the ends PB is several micrometers to several tens of micrometers. A rotating grinding wheel (not shown) is moved in the radial direction Y to grind the outer peripheral surface 20C of the inner shaft 20 to form a substantially U-shaped first raceway groove 23 in the axial direction X. The finished first raceway groove 23 has such a depth V that smoothly decreases from the middle PA toward the ends PB. The wall surface 23A of the first raceway groove 23 is smoothly continuous from the middle PA toward the ends PB. The depth W (depth in the radial direction Y) of the second raceway groove 24 of the outer shaft 21 is constant in the entire second stroke range Q.

In this case, the interval M between the first and second raceway grooves 23, 24 (the interval between the bottoms of the first and second raceway grooves 23, 24 in the radial direction Y) decreases from the middle PA toward the ends PB of the first stroke range P. Interference between each of the first and second raceway grooves 23, 24 and the balls 22 therefore increases from the middle PA toward the ends PB of the first stroke range P. Accordingly, the balls 22 interposed between the first and second raceway grooves 23, 24 are less likely to move from the middle PA toward the ends PB of the first stroke range P. All the balls 22 can thus be held in the middle PA of the first stroke range P so as to be arranged substantially at small regular intervals H. This can suppress such movement of the balls 22 that causes advance and delay of the balls 22.

Conventionally, a cage (not shown) that holds the plurality of balls 22 is used in order to suppress movement of the balls 22. In the present invention, however, such a cage can be omitted. Accordingly, such movement of the balls 22 that causes advance and delay of the balls 22 can be suppressed at low cost. The second to seventh embodiments described below also have this advantage. In the telescopic shaft 1 of the second embodiment shown in FIG. 8, the depth W of the second raceway groove 24 decreases from the middle QA toward the ends QB of the second stroke range Q. For example, the difference in depth W between the middle QA and the ends QB is several micrometers to several tens of micrometers. As in the first embodiment, a rotating grinding wheel (not shown) is moved in the radial direction Y to grind the inner peripheral surface 21C of the outer shaft 21 to form a substantially U-shaped second raceway groove 24 in the axial direction X. The finished second raceway groove 24 has such a depth W that smoothly decreases from the middle QA toward the ends QB. The wall surface 24A of the second raceway groove 24 is smoothly continuous from the middle QA toward the ends QB. The depth V of the first raceway groove 23 is constant in the entire first stroke range P.

In this case, the interval M between the first and second raceway grooves 23, 24 decreases from the middle QA toward the ends QB of the second stroke range Q. Interference between each of the first and second raceway grooves 23, 24 and the balls 22 therefore increases from the middle QA toward the ends QB of the second stroke range Q. Accordingly, the balls 22 interposed between the first and second raceway grooves 23, 24 are less likely to move from the middle QA toward the ends QB of the second stroke range Q. All the balls 22 can thus be held in the middle QA of the second stroke range Q so as to be arranged substantially at small regular intervals H. This can suppress advance and delay of the balls 22.

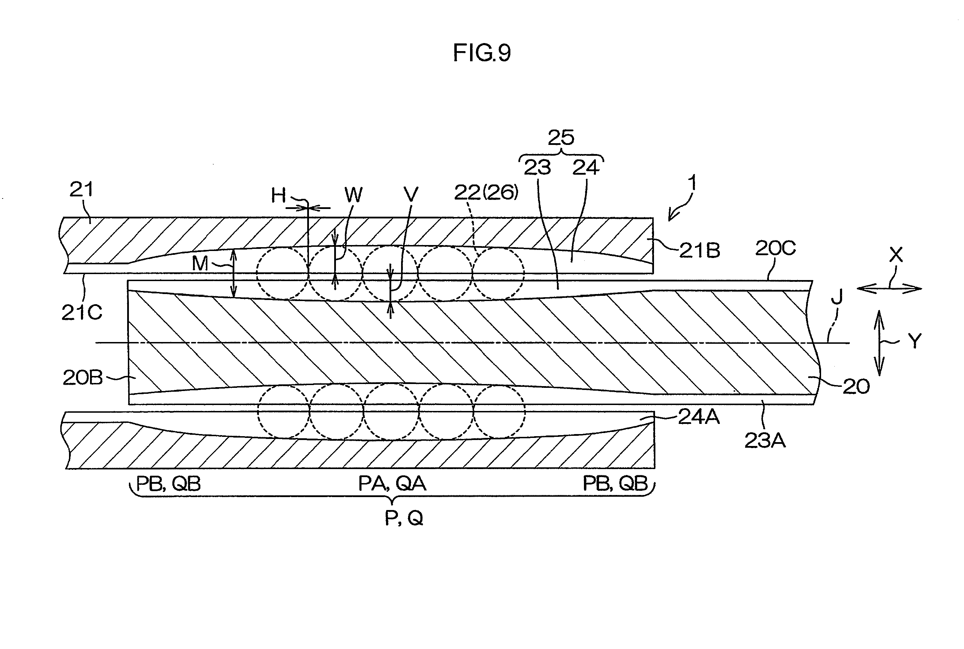

The third embodiment shown in FIG. 9 is a combination of the first and second embodiments. In the third embodiment, the depth V of the first raceway groove 23 decreases from the middle PA toward the ends PB of the first stroke range P, and the depth W of the second raceway groove 24 decreases from the middle QA toward the ends QB of the second stroke range Q. All the balls 22 interposed between the first and second raceway grooves 23, 24 can thus be held in the middle PA of the first stroke range P and the middle QA of the second stroke range Q so as to be arranged substantially at small regular intervals H.

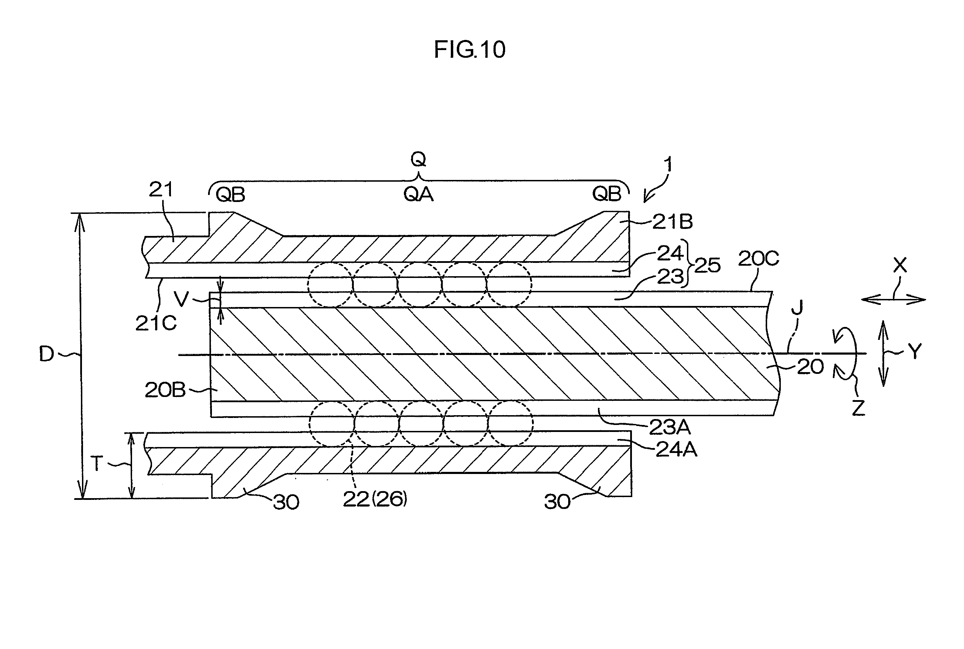

In the fourth to seventh embodiments described below, such movement of the balls 22 that causes advance and delay of the balls 22 is suppressed by means different from that of the first to third embodiments. In the fourth to seventh embodiments, the depth V of the first raceway groove 23 of the inner shaft 20 is constant in the entire first stroke range P. The telescopic shaft 1 of the fourth embodiment shown in FIG. 10 includes rigidity increasing portions 30 that increase rigidity of the outer shaft 21 at the ends QB of the second stroke range Q.

One rigidity increasing portion 30 is provided at each of the positions in the outer shaft 21 which correspond to the ends QB. Each rigidity increasing portion 30 is formed in the shape of a flange that protrudes outward in the radial direction Y along the entire circumference of the outer shaft 21. Due to the rigidity increasing portions 30, the outer shaft 21 has a larger outside diameter D at the ends QB than in the middle QA of the second stroke range Q. The outer shaft 21 therefore has a larger thickness T at the ends QB. The outer shaft 21 thus has higher rigidity at the ends QB as compared to the case where the outer shaft 21 has no rigidity increasing portion 30.

As described above, the rigidity of the outer shaft 21 is increased at the ends QB by the rigidity increasing portions 30. This can reduce displacement (torsional displacement) of the outer shaft 21 at the ends QB when rotation torque is transmitted between the inner shaft 20 and the outer shaft 21. The rigidity of the outer shaft 21 is therefore substantially the same in the middle QA and at the ends QB. This can suppress variation in the contact angles between each of the wall surfaces 23A, 24A of the first and second raceway grooves 23, 24 and the balls 22 (the contact angles α_{SR}, α_{SL}, α_{NR}, α_{NL}) between those balls 22 located near the ends QB of the second stroke range Q and those balls located near the middle QA of the second stroke range Q. That is, all the balls 22 contact the wall surfaces 23A, 24A of the first and second raceway grooves 23, 24 substantially in the same manner, and the shape of the inscribed figure K (see FIG. 6) changes in the same manner in all the balls 22. This can suppress advance and delay of the balls 22.

The rigidity increasing portions 30 may be formed integrally with the outer shaft 21 as shown in the fourth embodiment.

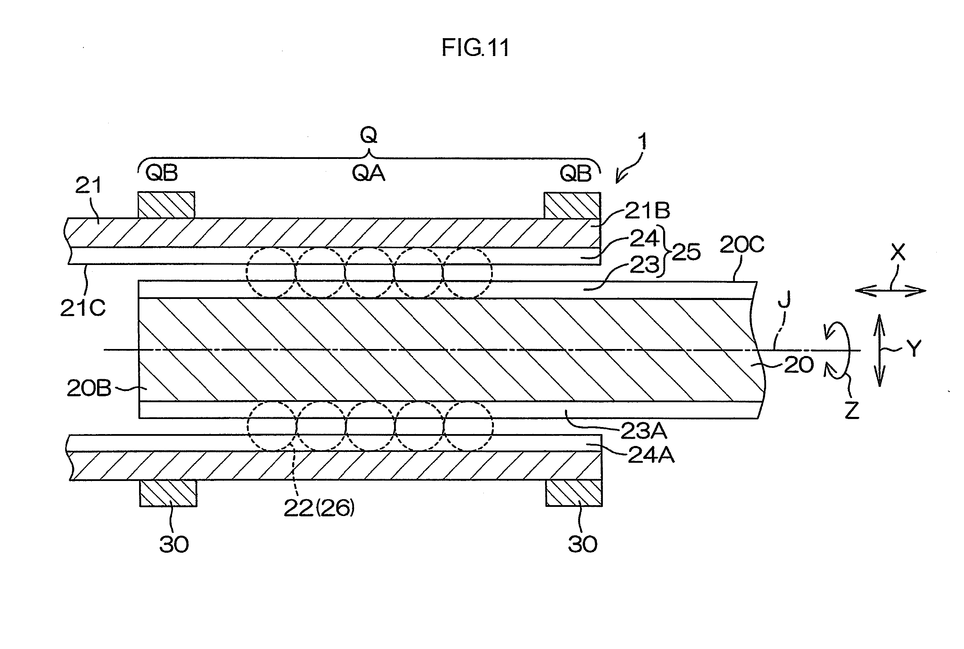

In the fifth embodiment shown in FIG. 11, the rigidity increasing portions 30 are provided as separate members from the outer shaft 21. The rigidity increasing portions 30 are fitted on the outer shaft 21 at the positions corresponding to the ends QB.

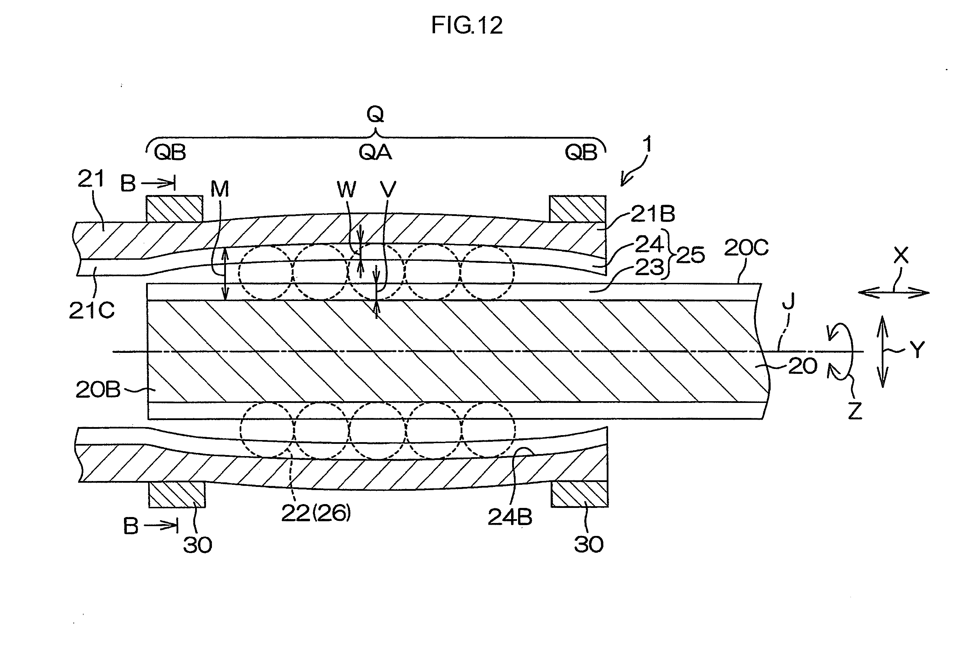

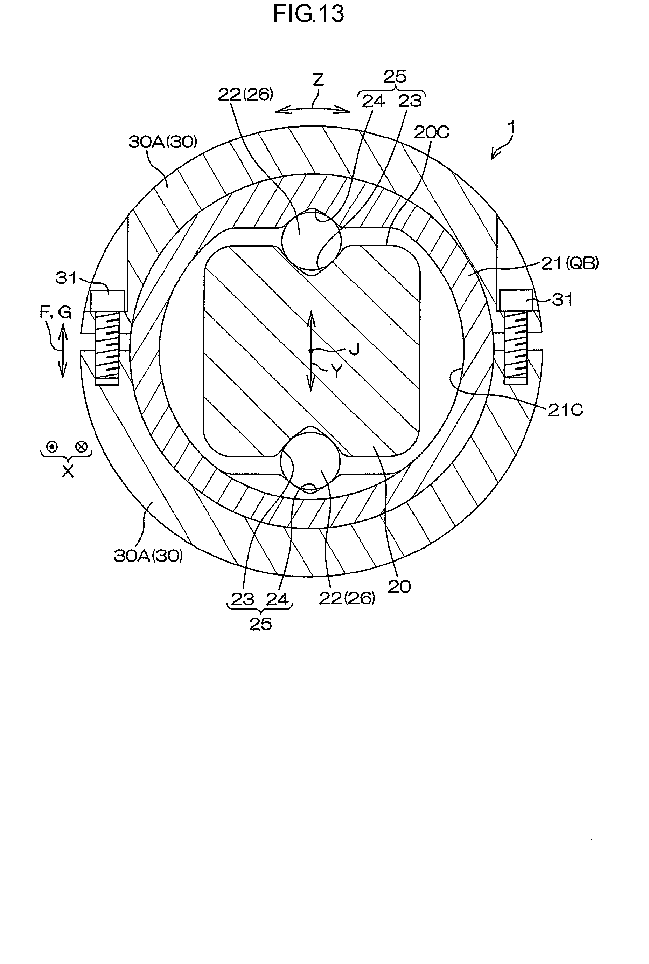

In the sixth embodiment shown in FIGS. 12 and 13, the rigidity increasing portions 30 provided as separate members from the outer shaft 21 compress the outer shaft 21 toward the inner shaft 20 at the ends QB of the second stroke range Q to increase the rigidity of the outer shaft 21 at the ends QB. In this example, each rigidity increasing portion 30 is formed by a pair of parts 30A curved substantially in a C-shape. The outer shaft 21 is held by the pair of parts 30A from outside in the radial direction Y, and bolts 31 are tightened to move the parts 30A toward each other. The outer shaft 21 is thus reduced in diameter at the ends QB and tightened toward the inner shaft 20.

Since the outer shaft 21 is tightened toward the inner shaft 20 by the rigidity increasing portions 30, the distance from the second raceway groove 24 to the inner shaft 20 can be reduced from the middle QA toward the ends QB of the second stroke range Q. For example, the difference in depth of the second raceway groove 24 between the middle QA and the ends QB is several micrometers to several tens of micrometers. In the sixth embodiment, the interval M between the first and second raceway grooves 23, 24 decreases from the middle QA toward the ends QB of the second stroke range Q, and interference between each of the first and second raceway grooves 23, 24 and the balls 22 increases from the middle QA toward the ends QB of the second stroke range Q. Accordingly, the balls 22 interposed between the first and second raceway grooves 23, 24 are less likely to move from the middle QA toward the ends QB of the second stroke range Q. All the balls 22 can thus be held in the middle QA of the second stroke range Q so as to be arranged at small intervals. This can further suppress advance and delay of the balls 22.

A direction F in which the parts 30A holding the outer shaft 21 face each other matches a direction G in which the first and second raceway grooves 23, 24 face each other (see FIG. 13). This can reliably increase the interference between each of the first and second raceway grooves 23, 24 and the balls 22 from the middle QA toward the ends QB of the second stroke range Q as the parts 30A are moved toward each other by tightening the bolts 31.

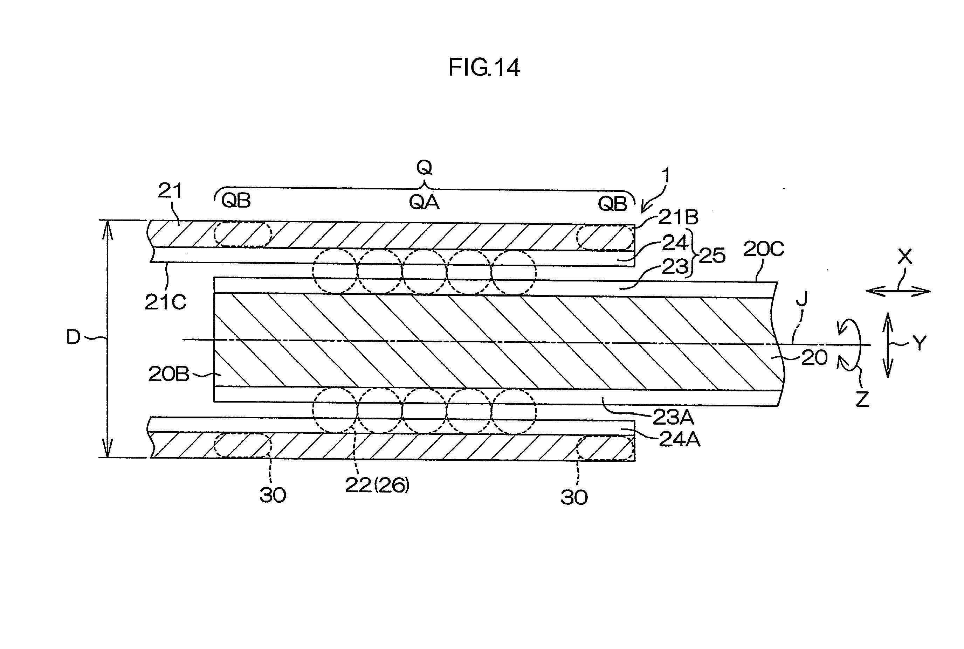

In the seventh embodiment shown in FIG. 14, those portions of the outer shaft 21 which correspond to the ends QB (the portions surrounded by dashed lines) are locally quenched so that these portions serve as the rigidity increasing portions 30. In this case, the outside diameter D of the outer shaft 21 may be constant in the entire stroke range Q. The present invention is not limited to the above embodiments, and various modifications can be made without departing from the spirit and scope of the present invention.

For example, the telescopic shaft 1 may be applied to the steering shaft 4, a drive shaft (not shown) serving as a drive shaft of an engine, and a linear guide (not shown) in addition to the intermediate shaft. The outer shaft 21 may be caused to generate an elastic restoring force toward the inner shaft 20 so that the balls 22 are elastically held between the first raceway groove 23 of the inner shaft 20 and the second raceway groove 24 of the outer shaft 21. A preload is thus applied to the balls 22, which can reduce backlash in the rotational direction between the inner shaft 20 and the outer shaft 21 and can increase torsional rigidity of the telescopic shaft 1.

Grease as a lubricant may be introduced into the raceway track 25 to lubricate the contact portions between each of the first and second raceway grooves 23, 24 and the balls 22. The first raceway groove 23 of the inner shaft 20 may be formed in a wider range than the first stroke range P or may be formed only in the first stroke range P. Similarly, the second first raceway groove 24 of the outer shaft 21 may be formed in a wider range than the second stroke range Q or may be formed only in the second stroke range Q.

## Claims

1. A telescopic shaft, comprising:
an inner shaft and a cylindrical outer shaft that are fitted together so that the inner and outer shafts can move relative to each other in an axial direction and can transmit torque to each other;
a first raceway groove formed in an outer peripheral surface of the inner shaft so as to extend in the axial direction;
a second raceway groove formed in an inner peripheral surface of the outer shaft so as to extend in the axial direction and to face the first raceway groove; and
a plurality of balls that are interposed between the first and second raceway grooves, that are arranged in a row in the axial direction, and that roll in a first stroke range in the axial direction with respect to the inner shaft and roll in a second stroke range in the axial direction with respect to the outer shaft as the inner shaft and the outer shaft move relative to each other in the axial direction, wherein
a depth of the first raceway groove decreases from a middle toward both ends of the first stroke range.

2. A telescopic shaft, comprising:
an inner shaft and a cylindrical outer shaft that are fitted together so that the inner and outer shafts can move relative to each other in an axial direction and can transmit torque to each other;
a first raceway groove formed in an outer peripheral surface of the inner shaft so as to extend in the axial direction;
a second raceway groove formed in an inner peripheral surface of the outer shaft so as to extend in the axial direction and to face the first raceway groove; and
a plurality of balls that are interposed between the first and second raceway grooves, that are arranged in a row in the axial direction, and that roll in a first stroke range in the axial direction with respect to the inner shaft and roll in a second stroke range in the axial direction with respect to the outer shaft as the inner shaft and the outer shaft move relative to each other in the axial direction, wherein
a depth of the second raceway groove decreases from a middle toward both ends of the second stroke range.

3. The telescopic shaft according to claim 2, wherein
a depth of the first raceway groove decreases from a middle toward both ends of the first stroke range.

4. A telescopic shaft, comprising:
an inner shaft and a cylindrical outer shaft that are fitted together so that the inner and outer shafts can move relative to each other in an axial direction and can transmit torque to each other;
a first raceway groove formed in an outer peripheral surface of the inner shaft so as to extend in the axial direction;
a second raceway groove formed in an inner peripheral surface of the outer shaft so as to extend in the axial direction and to face the first raceway groove;
a plurality of balls that are interposed between the first and second raceway grooves, that are arranged in a row in the axial direction, and that roll in a first stroke range in the axial direction with respect to the inner shaft and roll in a second stroke range in the axial direction with respect to the outer shaft as the inner shaft and the outer shaft move relative to each other in the axial direction; and
a rigidity increasing portion that increases rigidity of the outer shaft at both ends of the second stroke range.

5. The telescopic shaft according to claim 4, wherein
the rigidity increasing portion makes an outside diameter of the outer shaft larger at the ends of the second stroke range than in a middle of the second stroke range.

6. The telescopic shaft according to claim 4, wherein
the rigidity increasing portion tightens the outer shaft toward the inner shaft at the ends of the second stroke range.

7. The telescopic shaft according to any one of claims 1 to 6, wherein
the telescopic shaft is an intermediate shaft that couples a steering shaft and a steering operation mechanism.
